# EUROPÄISCHE PATENTANMELDUNG

(11) **EP 1 876 849 A1**
(43) Veröffentlichungstag der Anmeldung: **09.01.2008**
(21) Anmeldenummer: 06014045.6
(22) Anmeldetag: 06.07.2006
(51) Int. Cl.: H04Q 7/38

(54) **Handover und gleichzeitig stattfindende Neukonfiguration in einem Mobilfunkkommunikationssystem**

(71) Anmelder: NOKIA SIEMENS NETWORKS GMBH & CO. KG, 81541 München (DE)
(72) Erfinder: Fehringer, Manfred, 3300 Winklarn-Haag Dorf (AT); Kunz, Walter, 2751 Matzendorf (AT); Unteregger, Burghard, 1040 Wien (AT); Vesely, Alexander, 8330 Raabau (AT)

(57) **Zusammenfassung**

Die Erfindung betrifft ein Verfahren zum Betreiben eines Funkkommunikationssystems, bei welchem ein Handover einer Teilnehmerstation (UE) von einer ersten Funkzelle (S1) zu einer zweiten Funkzelle (S2) erfolgt. Zur Kommunikation mit der Teilnehmerstation (UE) wird in der ersten Funkzelle (S1) ein erstes Zuordnungsmuster und in der zweiten Funkzelle (S2) ein hiervon unterschiedliches zweites Zuordnungsmuster verwendet, wobei die Zuordnungsmuster jeweils eine Zuordnung von Teilen von an die Teilnehmerstation (UE) versendeten Nachrichten zu Kanälen ermöglichen. Während des Handovers überträgt eine Steuereinrichtung (RNC) an die Teilnehmerstation (UE) zu versendende Daten an eine gemeinsame Einrichtung (NodeB), welche die erste Funkzelle (S1) und die zweite Funkzelle (S2) versorgt. Hierbei sind die an die gemeinsame Einrichtung (NodeB) übertragenen Daten derart zusammengesetzt, dass eine Versendung an die Teilnehmerstation (UE) alternativ unter Verwendung des ersten Zuordnungsmusters oder unter Verwendung des zweiten Zuordnungsmusters möglich ist. Weiterhin betrifft die Erfindung ein Funkkommunikationssystem zur Durchführung des Verfahrens.

## Beschreibung

Die Erfindung betrifft ein Verfahren zum Betreiben eines Funkkommunikationssystems, bei welchem ein Handover einer Teilnehmerstation von einer ersten zu einer zweiten Funkzelle erfolgt.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Sind in einem Funkkommunikationssystem mehrere Funkzellen vorhanden, so ist es aufgrund der Mobilität von Teilnehmerstationen vorteilhaft, wenn ein Handover einer Teilnehmerstation von einer ersten zu einer zweiten Funkzelle möglich ist, ohne dass die Kommunikation der Teilnehmerstation abgebrochen werden muss. Bei einem so genannten Hard Handover kommuniziert die Teilnehmerstation vor dem Handover mit der netzseitigen Funkstation der ersten Funkzelle und nach dem Handover mit der netzseitigen Funkstation der zweiten Funkzelle; eine gleichzeitige Verbindung der Teilnehmerstation zu beiden Funkzellen existiert demnach nicht.

Der Erfindung liegt die Aufgabe zugrunde, ein Verfahren zur Kommunikation per Funk vorzustellen, bei welchem ein Handover einer Teilnehmerstation von einer ersten zu einer zweiten Funkzelle erfolgt. Weiterhin soll ein Funkkommunikationssystem zur Durchführung des Verfahrens vorgestellt werden.

Diese Aufgabe wird durch ein Verfahren mit den Merkmalen des Anspruchs 1 und durch ein Funkkommunikationssystem mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zum Betreiben eines Funkkommunikationssystems erfolgt ein Handover einer Teilnehmerstation von einer ersten zu einer zweiten Funkzelle. Zur Kommunikation mit der Teilnehmerstation wird in der ersten Funkzelle ein erstes Zuordnungsmuster und in der zweiten Funkzelle ein zweites von dem ersten Zuordnungsmuster unterschiedliches Zuordnungsmuster verwendet. Die Zuordnungsmuster ermöglichen hierbei jeweils eine Zuordnung von Teilen von an die Teilnehmerstation versendeten Nachrichten zu Kanälen. Während des Handovers überträgt eine Steuereinrichtung an die Teilnehmerstation zu versendende Daten an eine gemeinsame Einrichtung. Die gemeinsame Einrichtung versorgt die erste und die zweite Funkzelle. Die an die gemeinsame Einrichtung übertragenen Daten sind derart zusammengesetzt, dass eine Versendung an die Teilnehmerstation alternativ unter Verwendung des ersten Zuordnungsmusters oder unter Verwendung des zweiten Zuordnungsmusters möglich ist.

Die Zuordnungsmuster dienen der Zuordnung von Nachrichtenteilen zu Kanälen. Hierbei handelt es sich um Kanäle, welche eine bestimmte, z.B. die dritte, Schicht des sender- und empfängerseitigen Protokollstapels zur Kommunikation mit einer darüber oder darunter liegenden Schicht verwendet. Ein Kanal kann z.B. ausschließlich für Daten eines bestimmten Typs verwendet werden, wie z.B. für Signalisierungsdaten oder Daten von bestimmten Diensten. Das für die Teilnehmerstation verwendete Zuordnungsmuster in der ersten Funkzelle unterscheidet sich von demjenigen in der zweiten Funkzelle. Dies bedeutet, dass in Bezug auf das Zuordnungsmuster mit dem Handover eine Neukonfiguration erfolgt.

Es existiert eine gemeinsame Einrichtung, welche sowohl für die erste als auch für die zweite Funkzelle zuständig ist. In Bezug auf diese gemeinsame Einrichtung wird ein Intra-Einrichtungs-Handover durchgeführt, denn sowohl die alte als auch die neue Funkzelle wird von der gemeinsamen Einrichtung versorgt.

Während des Handovers erfolgt eine spezielle Datenübertragung von der Steuereinrichtung an die gemeinsame Einrichtung in Bezug auf Daten, welche für die Teilnehmerstation bestimmt sind. Diese an die gemeinsame Einrichtung übertragenen Daten sind so ausgestaltet, dass sie sowohl mit dem ersten als auch mit dem zweiten Zuordnungsmuster kompatibel sind. Die Versendung dieser Daten ist somit nicht nur entweder in der ersten oder in der zweiten Funkzelle möglich, vielmehr kann eine Versendung dieser Daten alternativ in der ersten oder der zweiten Funkzelle stattfinden. Das erfindungsgemäße Vorgehen kann hierbei auf alle für die Teilnehmerstation bestimmten Daten oder lediglich auf einen Teil derselben angewandt werden.

Die Erfindung betrifft die Zeitspanne während dem Handover. Diese während dem Handover verstreichende Zeitspanne kann je nach konkreter Ausgestaltung des Handover-Vorgangs unterschiedlich lange andauern. Sie kann z.B. durch einen ersten Zeitpunkt begrenzt sein, ab welchem eine Kontaktaufnahme der Teilnehmerstation mit der zweiten Funkzelle möglich ist, sowie durch einen zweiten Zeitpunkt, zu welchem die Teilnehmerstation in der zweiten Funkzelle mitteilt, dass der Handover erfolgreich abgeschlossen ist, oder erneut eine Kontaktaufnahme mit der ersten Funkzelle durchführt.

Einer bevorzugten Weiterbildung der Erfindung gemäß werden während des Handovers für die Übertragung der Daten auf einer Schnittstelle zwischen der Steuereinrichtung und der gemeinsamen Einrichtung gemeinsame Übertragungsressourcen für die erste und die zweiten Funkzelle eingesetzt. In diesem Fall existieren nicht Übertragungsressourcen, welche für die Datenübertragung in Bezug auf für die erste Funkzelle bestimmte Daten der Teilnehmerstation eingesetzt werden, und hiervon ohne Überschneidung unterschiedliche Übertragungsressourcen, welche für die Datenübertragung in Bezug auf für die zweite Funkzelle bestimmte Daten der Teilnehmerstation eingesetzt werden. Vielmehr überschneiden sich diese Übertragungsressourcen zumindest teilweise. Dies ist vorteilhaft, da hierdurch die Kapazität der Schnittstelle zwischen der Steuereinrichtung und der gemeinsamen Einrichtung nicht eingeschränkt wird.

In Ausgestaltung der Erfindung empfängt die gemeinsame Einrichtung die Daten von der Steuereinrichtung und ordnet diese der ersten oder der zweiten Funkzelle zu. Die Daten können dann entweder in der ersten Funkzelle oder in der zweiten Funkzelle an die Teilnehmerstation gesendet werden.

Besonders vorteilhaft ist es, wenn das zweite Zuordnungsmuster eine Zuordnung von Teilen von an die Teilnehmerstation versendeten Nachrichten zu einer größeren Anzahl von Kanälen ermöglicht als das erste Zuordnungsmuster. Dies kann z.B. damit einhergehen, dass die Teilnehmerstation in der zweiten Funkzelle mindestens einen zusätzlichen Dienst nutzt gegenüber der ersten Funkzelle. Insbesondere ist es möglich, dass der Handover erfolgt, weil der mindestens eine zusätzliche Dienst der Teilnehmerstation in der ersten Funkzelle grundsätzlich nicht oder aktuell nicht zur Verfügung gestellt werden kann.

In Ausgestaltung der Erfindung umfassen die Zuordnungsmuster jeweils eine Mehrzahl von alternativ einzusetzenden Zuordnungsvorschriften. Innerhalb eines Zuordnungsmusters kann senderseitig aus den Zuordnungsvorschriften eine Zuordnungsvorschrift zur aktuellen Verwendung ausgewählt werden. Dass die Daten derart zusammengesetzt sind, dass alternativ eine Versendung unter Verwendung des ersten oder des zweiten Zuordnungsmusters möglich ist, bedeutet, dass die derart zusammengesetzten Daten sowohl einer Zuordnungsvorschrift des ersten Zuordnungsmusters entsprechen, als auch einer Zuordnungsvorschrift des zweiten Zuordnungsmusters. Insbesondere kann es sich bei den Zuordnungsmustern um Transportformatkombinations-Sets handeln. Diese sind aus den Spezifikationen von UMTS bekannt.

Besonders vorteilhaft ist es, wenn es sich bei der gemeinsamen Einrichtung um eine netzseitige Funkstation handelt. In diesem Fall ist diese netzseitige Funkstation für mehrere Funkzellen, manchmal auch als Sektoren bezeichnet, zuständig. Die Kommunikation der Teilnehmerstation erfolgt somit nach dem Handover und vor dem Handover mit der gleichen netzseitigen Funkstation.

Es kann sich bei der gemeinsamen Einrichtung auch um eine Einrichtung handeln, welche eine die erste Funkzelle versorgende netzseitige Funkstation und eine die zweite Funkzelle versorgende netzseitige Funkstation versorgt. In diesem Fall erfolgt die Kommunikation der Teilnehmerstation nach dem Handover mit einer anderen netzseitigen Funkstation als vor dem Handover.

In Ausgestaltung der Erfindung werden nach dem Handover von der Steuereinrichtung Daten an die gemeinsame Einrichtung übertragen, welche derart zusammengesetzt sind, dass eine Versendung an die Teilnehmerstation ausschließlich unter Verwendung des zweiten Zuordnungsmusters möglich ist. Es werden somit nach dem Handover Daten an die gemeinsame Einrichtung übertragen, welche nicht gemäß dem ersten Zuordnungsmuster an die Teilnehmerstation versendbar sind. Dies kann auf alle oder auch nur manche der nach dem Handover von der Steuereinrichtung an die gemeinsame Einrichtung übertragenen Daten zutreffen.

Das erfindungsgemäße Funkkommunikationssystem umfasst eine Steuereinrichtung, sowie eine gemeinsame Einrichtung. Hierbei versorgt die gemeinsame Einrichtung eine erste und eine zweite Funkzelle. Es sind Mittel vorhanden zum Durchführen eines Handovers einer Teilnehmerstation von der ersten zu der zweiten Funkzelle, sowie Mittel zum Verwendung zur Kommunikation mit der Teilnehmerstation in der ersten Funkzelle eines ersten Zuordnungsmusters und in der zweiten Funkzelle eines von dem ersten Zuordnungsmuster unterschiedlichen zweiten Zuordnungsmusters. Hierbei ermöglichen die Zuordnungsmuster jeweils eine Zuordnung von Teilen von an die Teilnehmerstation versendeten Nachrichten zu Kanälen. Weiterhin sind Mittel der Steuereinrichtung vorhanden zum Übertragen während des Handovers von an die Teilnehmerstation zu versendenden Daten an die gemeinsame Einrichtung, wobei diese Daten derart zusammengesetzt sind, dass eine Versendung an die Teilnehmerstation alternativ unter Verwendung des ersten Zuordnungsmusters oder unter Verwendung des zweiten Zuordnungsmusters möglich ist.

Das erfindungsgemäße Funkkommunikationssystem eignet sich insbesondere zur Durchführung des erfindungsgemäßen Verfahrens, wobei dies auch auf die Ausgestaltungen und Weiterbildungen zutreffen kann. Hierzu kann es weitere geeignete Mittel und Bestandteile umfassen.

Im folgenden wird die Erfindung anhand eines Ausführungsbeispiels näher erläutert. Dabei zeigen:
- Figur 1:: einen ersten Ausschnitt aus einem Mobilfunkkommunikationssystem,
- Figur 2:: ein erstes Transportformatkombinations-Set,
- Figur 3:: ein zweites Transportformatkombinations-Set,
- Figur 4A:: eine erste Verbindungskonstellation zwischen einer Steuereinrichtung und einer netzseitigen Funkstation,
- Figur 4B:: eine zweite Verbindungskonstellation zwischen einer Steuereinrichtung und einer netzseitigen Funkstation,
- Figur 5:: einen zweiten Ausschnitt aus einem Mobilfunkkommunikationssystem.

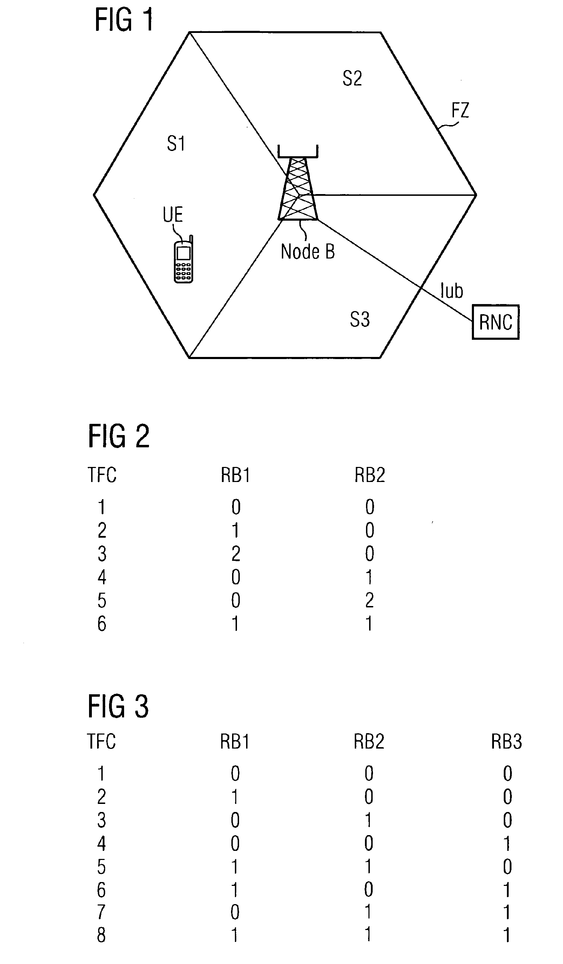

Der in Figur 1 dargestellte Ausschnitt aus einem Mobilfunkkommunikationssystem zeigt den Funkversorgungsbereich FZ der netzseitigen Funkstation NodeB, welcher aus den drei Funkzellen S1, S2 und S3 besteht. In der Funkzelle S1 kommuniziert die Teilnehmerstation UE aktuell per Funk mit der netzseitigen Funkstation NodeB. Die netzseitige Funkstation NodeB ist über eine mit Iub bezeichnete Schnittstelle mit einer Steuereinrichtung RNC verbunden, welche für die Steuerung und Überwachung der netzseitigen Funkstation NodeB und ihrer Funkzellen S1, S2 und S3 zuständig ist. Die Erfindung wird anhand eines Mobilfunkkommunikationssystems nach dem Standard UMTS erläutert. Sie ist jedoch auch auf andere Systeme anwendbar, insbesondere kann es sich bei dem betrachteten Mobilfunkkommunikationssystem um ein System gemäß einer Weiterentwicklung von UMTS, als LTE (Long Term Evolution) bezeichnet, handeln.

Beim Aufbau der Verbindung zwischen der netzseitigen Funkstation NodeB und der Teilnehmerstation UE in der Funkzelle S1 wird ein Transportformatkombinations-Set vereinbart, welches für Datenübertragungen in Abwärtsrichtung, d.h. für Datenübertragungen von der netzseitigen Funkstation NodeB zu der Teilnehmerstation UE, verwendet wird. Dieses aktuell in der Funkzelle S1 eingesetzte Transportformatkombinations-Set ist in Figur 2 dargestellt. Die linke Spalte entspricht hierbei einer Nummer einer Transportformatkombination (TFC: Transport Format Combination). Eine Transportformatkombination gibt die Anzahl der Transportblöcke an, die pro Funkrahmen auf einem Transportkanal übertragen werden. Über einen Transportkanal werden Transportblöcke zwischen der MAC-Schicht, d.h. der zweiten Schicht des Protokollstapels, und der physikalischen Schicht, d.h. der ersten Schicht des Protokollstapels, übertragen. Aus der Angabe der Transportformatkombination kann der Empfänger somit durch Abzählen der Bits vom Beginn eines empfangenen Funkrahmens die empfangenen Bits den jeweiligen Transportblöcken der Transportkanäle zuordnen.

Die mittlere Spalte des Transportformatkombinations-Sets der Figur 2 gibt die Anzahl der Transportblöcke eines ersten Radio Bearers RB1 an, welche bei der jeweiligen in der linken Spalte angegebenen Transportformatkombination pro Funkrahmen übertragen werden. Entsprechend gibt die rechte Spalte des Transportformatkombinations-Sets der Figur 2 die Anzahl der Transportblöcke eines zweiten Radio Bearers RB2 an, welche bei der jeweiligen in der linken Spalte angegebenen Transportformatkombination pro Funkrahmen übertragen werden. Ein Radio Bearer ist ein Kanal der dritten Schicht des Protokollstapels. Für die Teilnehmerstation UE sind somit in der Funkzelle S1 die beiden Radio Bearer RB1 und RB2 eingerichtet. Der erste Radio Bearer RB1 kann z.B. der Übertragung von Telefonie-Daten und der zweite Radio Bearer RB2 der Übertragung von Signalisierungs-Daten dienen.

Die Steuereinrichtung RNC überträgt die an die Teilnehmerstation UE in der Funkzelle S1 zu versendenden Daten gemäß einer der mit der Teilnehmerstation UE vereinbarten Transportformatkombinationen der Figur 2 an die netzseitige Funkstation NodeB. Überträgt die Steuereinrichtung RNC beispielsweise zwei Transportblöcke des ersten Radio Bearers RB1 und keinen Transportblock des zweiten Radio Bearers RB2 an die netzseitige Funkstation NodeB, so erkennt die netzseitige Funkstation NodeB, dass die Transportformatkombination Nummer 3 zu verwenden ist und signalisiert dies unter Verwendung eines Transportformatkombinationsindikators an die Teilnehmerstation UE.

Die Verwendung von Transportformatkombinationen in UMTS ist z.B. beschrieben in den Standardspezifikationen
3GPP TS 25.211: Physical channels and mapping of transport channels onto physical channels (FDD),
3GPP TS 25.212: Multiplexing and channel coding (FDD),
3GPP TS 25.214: Physical layer procedures (FDD),
3GPP TS 25.302: Services provided by the physical layer,
3GPP TS 25.321 Medium Access Control (MAC) protocol specification,
3GPP TS 25.331 Radio Resource Control (RRC),
3GPP TS 25.427 UTRAN Iub/Iur interface user plane protocol for DCH data streams.

Möchte die Teilnehmerstation UE einen neuen Dienst in Anspruch nehmen, so z.B. einen packet-switched Dienst wie den Download von Daten aus dem Internet, wird hierzu ein weiterer Radio Bearer eingerichtet. Es muss somit eine Neukonfiguration erfolgen, bei welcher der Teilnehmerstation UE ein neues Transportformatkombinations-Set mitgeteilt wird. Figur 3 zeigt ein Transportformatkombinations-Set für den Fall, dass neben dem ersten Radio Bearer RB1 und dem zweiten Radio Bearer RB2 der dritte Radio Bearer RB3 eingerichtet ist. Der Aufbau der Darstellung von Figur 3 entspricht dem oben in Bezug auf Figur 2 erläuterten.

Im folgenden wird die Situation betrachtet, dass ein Handover der Teilnehmerstation UE von der Funkzelle S1 in die Funkzelle S2 erfolgen soll. Hierbei handelt es sich um einen Intra-NodeB Handover, denn die netzseitige Funkstation NodeB versorgt sowohl die Funkzelle S1 als auch die Funkzelle S2. Es wird ein Hard Handover durchgeführt, d.h. die Teilnehmerstation UE kommuniziert zuerst mit der netzseitigen Funkstation NodeB der Funkzelle S1 und im Anschluss mit der netzseitigen Funkstation NodeB der Funkzelle S2, ohne dass sie gleichzeitig die gleichen Daten von den beiden Funkzellen S1 und S2 empfängt. Der Zeitpunkt, zu welchem der Handover durchzuführen ist, fällt in etwa zusammen mit dem Zeitpunkt, zu welchem die oben erläuterte Neukonfiguration durchzuführen ist. Daher wird für die Kommunikation der Teilnehmerstation UE in der Funkzelle S1 das Transportformatkombinations-Set der Figur 2, und für die Kommunikation der Teilnehmerstation UE in der Funkzelle S2 das Transportformatkombinations-Set der Figur 3 verwendet. Die zeitliche Koinzidenz von Handover und Neukonfiguration kann z.B. dadurch bedingt sein, dass der Handover aus Kapazitätsgründen nötig ist, d.h. dass in der Funkzelle S1 der neue Dienst der Teilnehmerstation UE nicht zur Verfügung gestellt werden kann.

Die Steuereinrichtung RNC sendet vor dem Handover die an die Teilnehmerstation UE zu versendenden Daten an die netzseitige Funkstation NodeB entsprechend den Transportformatkombinationen der Figur 2, und nach erfolgreichem Handover entsprechend den Transportformatkombinationen der Figur 3. Sollte der Handover der Teilnehmerstation UE von der Funkzelle S1 in die Funkzelle S2 fehlschlagen, würde die Kommunikation der Teilnehmerstation UE in der Funkzelle S1 weitergeführt. Daher existiert eine Zeitspanne, im folgenden als Übergangszeit bezeichnet, während welcher eine Verbindung sowohl zwischen der Steuereinrichtung RNC und der Funkzelle S1 als auch zwischen der zwischen der Steuereinrichtung RNC und der Funkzelle S2 bestehen sollte. Während der Übergangszeit steht noch nicht fest, ob der Handover von der Funkzelle S1 zu der Funkzelle S2 erfolgreich abgeschlossen werden kann.

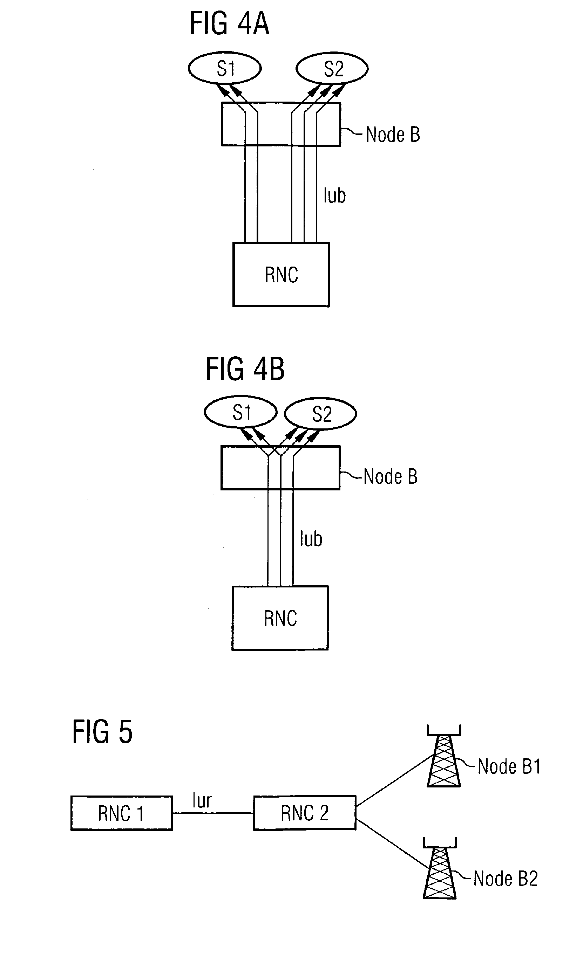

Figur 4A zeigt eine mögliche Konstellation für die Verbindungen über die Schnittstelle Iub zwischen der Steuereinrichtung RNC und der netzseitigen Funkstation NodeB während der Übergangszeit. Es ist eine Verbindung aufgebaut zwischen der Steuereinrichtung RNC und der Funkzelle S1, symbolisiert durch zwei Pfeile, entsprechend den beiden Radio Bearer RB1 und RB2. Weiterhin ist eine Verbindung aufgebaut zwischen der Steuereinrichtung RNC und der Funkzelle S2, symbolisiert durch drei Pfeile, entsprechend den drei Radio Bearer RB1, RB2 und RB3. Jeder Pfeil entspricht hierbei einem bestimmten Umfang an Übertragungskapazität der Schnittstelle Iub, welcher für diese Verbindung reserviert ist. Es existieren gemäß dieser Konstellation somit zwei getrennte Verbindungen für die beiden Funkzellen S1 und S2, wobei für beide Verbindungen Übertragungsressourcen freigehalten werden. In der netzseitigen Funkstation NodeB werden über die Verbindungen übertragene Daten empfangen und der jeweiligen Funkzelle S1 oder S2 zugeordnet, durch das Abknicken der Pfeile symbolisiert.

Figur 4B zeigt die im Rahmen der Erfindung eingesetzte Konstellation für die Verbindungen über die Schnittstelle Iub zwischen der Steuereinrichtung RNC und der netzseitigen Funkstation NodeB während der Übergangszeit. Es existiert lediglich eine Verbindung, symbolisiert durch drei Pfeile, entsprechend den drei Radio Bearer RB1, RB2 und RB3. Diese Verbindung wird sowohl für die Versorgung der Funkzelle S1 als auch für die Versorgung der Funkzelle S2 verwendet. Hierdurch müssen im Vergleich zur anhand von Figur 4A geschilderten Situation weniger Übertragungsressourcen auf der Iub Schnittstelle zwischen der Steuereinrichtung RNC und der netzseitigen Funkstation NodeB reserviert werden. In der netzseitigen Funkstation NodeB werden über diese Verbindung übertragene Daten empfangen und der jeweiligen Funkzelle S1 oder S2 zugeordnet, durch das Abknicken der Pfeile symbolisiert.

Wie bereits erläutert sollte es während der Übergangszeit sowohl möglich sein, dass die Steuereinrichtung RNC an die Teilnehmerstation UE zu versendende Daten an die Funkzelle S1 zur Versendung überträgt, als auch, dass die Steuereinrichtung RNC an die Teilnehmerstation UE zu versendende Daten an die Funkzelle S2 zur Versendung überträgt. Um dies bei der Konstellation der Figur 4B zu ermöglichen, wird eine Eigenschaft der beiden Transportformatkombinations-Sets der Figuren 2 und 3 ausgenutzt, wonach manche Transportformatkombinationen zumindest hinsichtlich der beiden Radio Bearer RB1 und RB2 übereinstimmen. Wird z.B. von der Steuereinrichtung RNC ein Transportblock des Radio Bearers 1 und kein Transportblock der Radio Bearer 2 und 3 an die netzseitige Funkstation NodeB übertragen, so entspricht dies der Transportformatkombination Nummer 2 des Transportformatkombinations-Sets der Figur 2 und der Transportformatkombination Nummer 2 des Transportformatkombinations-Sets der Figur 3.

Entsprechendes gilt für folgende Paare von Transportformatkombinationen:
- Transportformatkombination Nummer 1 des Transportformatkombinations-Sets der Figur 2 entspricht den Transportformatkombinationen Nummer 1 und Nummer 4 des Transportformatkombinations-Sets der Figur 3.
- Transportformatkombination Nummer 4 des Transportformatkombinations-Sets der Figur 2 entspricht den Transportformatkombinationen Nummer 3 und Nummer 7 des Transportformatkombinations-Sets der Figur 3.
- Transportformatkombination Nummer 6 des Transportformatkombinations-Sets der Figur 2 entspricht den Transportformatkombinationen Nummer 5 und Nummer 8 des Transportformatkombinations-Sets der Figur 3.

Hingegen haben die Transportformatkombinationen Nummer 3 und Nummer 5 der Figur 2, bei welchen zwei Transportblöcke des Radio Bearers 1 bzw. 2 übertragen werden, keine Entsprechung in dem Transportformatkombinations-Set der Figur 3. Daher sendet die Steuereinrichtung RNC während der Übergangszeit Daten der Radio Bearer RB1 und RB2 lediglich gemäß den Transportformatkombinationen Nummer 1, 2, 4 und 6 des Transportformatkombinations-Sets der Figur 2. Diese können sowohl von der Funkzelle S1 als auch von der Funkzelle S2 zur Versendung an die Teilnehmerstation UE verwendet werden.

Es können während der Übergangszeit auch Daten des Radio Bearers RB3 von der Steuereinrichtung RNC an die netzseitige Funkstation NodeB übertragen werden. Diese können jedoch lediglich von der Funkzelle S2 versendet werden. Sollte die Kommunikation mit der Teilnehmerstation UE über die Funkzelle S1 verlaufen, z.B. weil der Handover fehlgeschlagen ist, werden lediglich die Daten der Radio Bearer RB1 und RB2, und nicht die Daten des Radio Bearers RB3 versendet. Sendet die Steuereinrichtung RNC beispielsweise Daten gemäß der Transportformatkombination Nummer 7 des Transportformatkombinations-Sets der Figur 3, so würden diese in der Funkzelle S1 gemäß der Transportformatkombination Nummer 4 des Transportformatkombinations-Sets der Figur 2 gesendet.

Während der Übergangszeit wird somit in Bezug auf die Teilnehmerstation UE eine Verbindung zwischen der Steuereinheit RNC und der netzseitigen Funkstation NodeB zur Versorgung mehrerer Funkzellen mit den für die Teilnehmerstation UE bestimmten Daten verwendet. Daher überträgt die Steuereinrichtung RNC Daten in einem solchen Format, dass sie für eine Versendung an die Teilnehmerstation UE sowohl in der Funkzelle S1 als auch in der Funkzelle S2 geeignet sind. Die Übergangszeit wird beendet, wenn die Teilnehmerstation UE eine Nachricht in der neuen Funkzelle S2 sendet, wonach der Handovervorgang erfolgreich abgeschlossen wurde. In diesem Fall muss keine Verbindung mehr zwischen der Steuereinrichtung RNC und der alten Funkzelle S1 bestehen. Somit können fortan Daten von der Steuereinrichtung RNC zu der netzseitigen Funkstation NodeB ausschließlich unter Verwendung des neuen Transportformatkombinations-Sets der Figur 3 unabhängig von dem alten Transportformatkombinations-Set der Figur 2 übertragen werden. Eine andere Möglichkeit zur Beendigung der Übergangszeit ist, wenn der Handover fehlschlägt. In diesem Fall meldet sich die Teilnehmerstation UE wieder in der alten Funkzelle S1, woraufhin die Kommunikation der Teilnehmerstation UE in der alten Funkzelle S1 fortgeführt wird. Daten werden von der Steuereinrichtung RNC an die netzseitige Funkstation NodeB nun ausschließlich unter Verwendung des alten Transportformatkombinations-Sets der Figur 2 übertragen.

Bislang wurde die Übertragung von Daten von der Steuereinrichtung RNC an die netzseitige Funkstation NodeB betrachtet, wobei die netzseitige Funkstation NodeB sowohl die alte Funkzelle S1 als auch die neue Funkzelle S2 versorgt. Die Erfindung ist auch auf den in Figur 5 dargestellten Fall anwendbar, dass die alte Funkzelle von einer ersten netzseitigen Funkstation NodeB 1 und die neue Funkzelle von einer zweiten netzseitigen Funkstation NodeB 2 versorgt wird, wobei es sich bei der mit den beiden netzseitigen Funkstationen NodeB 1 und NodeB 2 verbundenen Steuereinrichtung RNC2 um einen so genannte Drift RNC handelt. Eine Steuereinrichtung RNC2 wird als Drift RNC bezüglich einer Teilnehmerstation bezeichnet, wenn für die Kommunikation der Teilnehmerstation UE Funkzellen benutzt werden, die von dieser Steuereinrichtung RNC2 verwaltet werden, die Teilnehmerstation UE aber weiterhin von einer anderen Steuereinrichtung RNC1, der als Serving RNC bezeichneten Steuereinrichtung, verwaltet wird. Die Steuereinrichtungen RNC1 und RNC2 sind über die Iur Schnittstelle miteinander verbunden. Die Erläuterungen zu Figur 4 sind mit der Maßgabe anwendbar, dass die Schnittstelle Iub durch die Schnittstelle Iur ersetzt wird, und somit das Abknicken der Pfeile in der Steuereinrichtung RNC2 erfolgt.

## Patentansprüche

1. Verfahren zum Betreiben eines Funkkommunikationssystems, bei welchem
ein Handover einer Teilnehmerstation (UE) von einer ersten Funkzelle (S1) zu einer zweiten Funkzelle (S2) erfolgt,
zur Kommunikation mit der Teilnehmerstation (UE) in der ersten Funkzelle (S1) ein erstes Zuordnungsmuster und in der zweiten Funkzelle (S2) ein hiervon unterschiedliches zweites Zuordnungsmuster verwendet wird,
wobei die Zuordnungsmuster jeweils eine Zuordnung von Teilen von an die Teilnehmerstation (UE) versendeten Nachrichten zu Kanälen (RB1, RB2, RB3) ermöglichen, während des Handovers eine Steuereinrichtung (RNC; RNC1) an die Teilnehmerstation (UE) zu versendende Daten an eine gemeinsame Einrichtung (NodeB; RNC2), welche die erste Funkzelle (S1) und die zweite Funkzelle (S2) versorgt, überträgt,
wobei die an die gemeinsame Einrichtung (NodeB; RNC2) übertragenen Daten derart zusammengesetzt sind, dass eine Versendung an die Teilnehmerstation (UE) alternativ unter Verwendung des ersten Zuordnungsmusters oder unter Verwendung des zweiten Zuordnungsmusters möglich ist.

2. Verfahren nach Anspruch 1, bei dem
während des Handovers für die Übertragung der Daten auf einer Schnittstelle (Iub) zwischen der Steuereinrichtung (RNC; RNC1) und der gemeinsamen Einrichtung (NodeB; RNC2) gemeinsame Übertragungsressourcen für die erste Funkzelle (S1) und die zweite Funkzelle (S2) eingesetzt werden.

3. Verfahren nach Anspruch 1 oder 2, bei dem
die gemeinsame Einrichtung (NodeB; RNC2) die Daten von der Steuereinrichtung (RNC; RNC1) empfängt und der ersten Funkzelle (S1) oder der zweiten Funkzelle (S2) zuordnet.

4. Verfahren nach Anspruch 3, bei dem
die Daten entweder in der ersten Funkzelle (S1) oder in der zweiten Funkzelle (S2) an die Teilnehmerstation (UE) gesendet werden.

5. Verfahren nach einem der Ansprüche 1 bis 4, bei dem
das zweite Zuordnungsmuster eine Zuordnung von Teilen von an die Teilnehmerstation (UE) versendeten Nachrichten zu einer größeren Anzahl von Kanälen (RB1, RB2, RB3) ermöglicht als das erste Zuordnungsmuster.

6. Verfahren nach Anspruch 5, bei dem
die Teilnehmerstation (UE) in der zweiten Funkzelle (S2) mindestens einen zusätzlichen Dienst nutzt gegenüber der ersten Funkzelle (S1).

7. Verfahren nach einem der Ansprüche 1 bis 6, bei dem
die Zuordnungsmuster jeweils eine Mehrzahl von alternativ einzusetzenden Zuordnungsvorschriften (TFC) umfassen.

8. Verfahren nach Anspruch 7, bei dem
es sich bei den Zuordnungsmustern um Transportformatkombinations-Sets handelt.

9. Verfahren nach einem der Ansprüche 1 bis 8, bei dem
es sich bei der gemeinsamen Einrichtung (NodeB; RNC2) um eine netzseitige Funkstation (NodeB) handelt.

10. Verfahren nach einem der Ansprüche 1 bis 8, bei dem
die gemeinsame Einrichtung (NodeB; RNC2) eine die erste Funkzelle (S1) versorgende netzseitige Funkstation (NodeB 1) und eine die zweite Funkzelle (S2) versorgende netzseitige Funkstation (NodeB2) versorgt.

11. Verfahren nach einem der Ansprüche 1 bis 9, bei dem
nach dem Handover von der Steuereinrichtung (RNC; RNC1) an die gemeinsame Einrichtung (NodeB; RNC2) Daten übertragen werden, welche derart zusammengesetzt sind, dass eine Versendung an die Teilnehmerstation (UE) ausschließlich unter Verwendung des zweiten Zuordnungsmusters möglich ist.

12. Funkkommunikationssystem, umfassend eine Steuereinrichtung (RNC; RNC1) und eine gemeinsame Einrichtung (NodeB; RNC2), welche eine erste Funkzelle (S1) und eine zweite Funkzelle (S2) versorgt,
mit Mitteln zum Durchführen eines Handovers einer Teilnehmerstation (UE) von der ersten Funkzelle (S1) zu der zweiten Funkzelle (S2),
mit Mitteln zum Verwenden zur Kommunikation mit der Teilnehmerstation (UE) in der ersten Funkzelle (S1) eines ersten Zuordnungsmusters und in der zweiten Funkzelle (S2) eines hiervon unterschiedlichen zweiten Zuordnungsmusters,
wobei die Zuordnungsmuster jeweils eine Zuordnung von Teilen von an die Teilnehmerstation (UE) versendeten Nachrichten zu Kanälen (RB1, RB2, RB3) ermöglichen,
mit Mitteln der Steuereinrichtung (RNC; RNC1) zum Übertragen während des Handovers von an die Teilnehmerstation (UE) zu versendenden Daten an die gemeinsame Einrichtung (NodeB; RNC2),
wobei die an die gemeinsame Einrichtung (NodeB; RNC2) übertragenen Daten derart zusammengesetzt sind, dass eine Versendung an die Teilnehmerstation (UE) alternativ unter Verwendung des ersten Zuordnungsmusters oder unter Verwendung des zweiten Zuordnungsmusters möglich ist.

## Geänderte Patentansprüche

### Geänderte Patentansprüche gemäss Regel 137(2) EPÜ.

**1.** Verfahren zum Betreiben eines Funkkommunikationssystems, bei welchem
ein Handover einer Teilnehmerstation (UE) von einer ersten Funkzelle (S1) zu einer zweiten Funkzelle (S2) erfolgt,
zur Kommunikation mit der Teilnehmerstation (UE) in der ersten Funkzelle (S1) ein erstes Zuordnungsmuster und in der zweiten Funkzelle (S2) ein hiervon unterschiedliches zweites Zuordnungsmuster verwendet wird,
wobei die Zuordnungsmuster jeweils eine Mehrzahl von alternativ einzusetzenden Zuordnungsvorschriften (TFC), die jeweils eine Zuordnung von Teilen von an die Teilnehmerstation (UE) versendeten Nachrichten zu Kanälen (RB1, RB2, RB3) ermöglichen, umfassen und
während des Handovers eine Steuereinrichtung (RNC; RNC1) an die Teilnehmerstation (UE) zu versendende Daten an eine gemeinsame Einrichtung (NodeB; RNC2), welche die erste Funkzelle (S1) und die zweite Funkzelle (S2) versorgt, überträgt,
**dadurch gekennzeichnet, dass**
für die an die gemeinsame Einrichtung (NodeB; RNC2) übertragenen Daten auf einer Schnittstelle (Iub) zwischen der Steuereinrichtung (RNC; RNC1) und der gemeinsamen Einrichtung (NodeB; RNC2) Zuordnungsvorschriften, die für die erste Funkzelle (S1) und die zweite Funkzelle (S2) gemeinsam sind, eingesetzt werden, damit eine Versendung an die Teilnehmerstation (UE) alternativ unter Verwendung des ersten Zuordnungsmusters oder unter Verwendung des zweiten Zuordnungsmusters möglich ist.

**2.** Verfahren nach Anspruch 1, bei dem
während des Handovers für die Übertragung der Daten auf einer Schnittstelle (Iub) zwischen der Steuereinrichtung (RNC; RNC1) und der gemeinsamen Einrichtung (NodeB; RNC2) gemeinsame Übertragungsressourcen für die erste Funkzelle (S1) und die zweite Funkzelle (S2) eingesetzt werden.

**3.** Verfahren nach Anspruch 1 oder 2, bei dem
die gemeinsame Einrichtung (NodeB; RNC2) die Daten von der Steuereinrichtung (RNC; RNC1) empfängt und der ersten Funkzelle (S1) oder der zweiten Funkzelle (S2) zuordnet.

**4.** Verfahren nach Anspruch 3, bei dem
die Daten entweder in der ersten Funkzelle (S1) oder in der zweiten Funkzelle (S2) an die Teilnehmerstation (UE) gesendet werden.

**5.** Verfahren nach einem der Ansprüche 1 bis 4, bei dem
das zweite Zuordnungsmuster eine Zuordnung von Teilen von an die Teilnehmerstation (UE) versendeten Nachrichten zu einer größeren Anzahl von Kanälen (RB1, RB2, RB3) ermöglicht als das erste Zuordnungsmuster.

**6.** Verfahren nach Anspruch 5, bei dem
die Teilnehmerstation (UE) in der zweiten Funkzelle (S2) mindestens einen zusätzlichen Dienst nutzt gegenüber der ersten Funkzelle (S1).

**7.** Verfahren nach einem der Ansprüche 1 bis 6, bei dem es sich bei den Zuordnungsmustern um Transportformatkombinations-Sets handelt.

**8.** Verfahren nach einem der Ansprüche 1 bis 7, bei dem
es sich bei der gemeinsamen Einrichtung (NodeB; RNC2) um eine netzseitige Funkstation (NodeB) handelt.

**9.** Verfahren nach einem der Ansprüche 1 bis 7, bei dem
die gemeinsame Einrichtung (NodeB; RNC2) eine die erste Funkzelle (S1) versorgende netzseitige Funkstation (NodeB 1) und eine die zweite Funkzelle (S2) versorgende netzseitige Funkstation (NodeB2) versorgt.

**10.** Verfahren nach einem der Ansprüche 1 bis 8, bei dem nach dem Handover von der Steuereinrichtung (RNC; RNC1) an die gemeinsame Einrichtung (NodeB; RNC2) Daten übertragen werden, welche derart zusammengesetzt sind, dass eine Versendung an die Teilnehmerstation (UE) ausschließlich unter Verwendung des zweiten Zuordnungsmusters möglich ist.

**11.** Funkkommunikationssystem, umfassend eine Steuereinrichtung (RNC; RNC1) und eine gemeinsame Einrichtung (NodeB; RNC2), welche eine erste Funkzelle (S1) und eine zweite Funkzelle (S2) versorgt,
mit Mitteln zum Durchführen eines Handovers einer Teilnehmerstation (UE) von der ersten Funkzelle (S1) zu der zweiten Funkzelle (S2),
mit Mitteln zum Verwenden zur Kommunikation mit der Teilnehmerstation (UE) in der ersten Funkzelle (S1) eines ersten Zuordnungsmusters und in der zweiten Funkzelle (S2) eines hiervon unterschiedlichen zweiten Zuordnungsmusters,
wobei die Zuordnungsmuster jeweils eine Mehrzahl von alternativ einzusetzenden Zuordnungsvorschriften (TFC), die jeweils eine Zuordnung von Teilen von an die Teilnehmerstation (UE) versendeten Nachrichten zu Kanälen (RB1, RB2, RB3) ermöglichen, umfassen,
mit Mitteln der Steuereinrichtung (RNC; RNC1) zum Übertragen während des Handovers von an die Teilnehmerstation (UE) zu versendenden Daten an die gemeinsame Einrichtung (NodeB; RNC2),
**dadurch gekennzeichnet, dass**
das Funkkommunikationssystem eine Schnittstelle (Iub) zwischen der Steuereinrichtung (RNC; RNC1) und der gemeinsamen Einrichtung (NodeB; RNC2) aufweist, auf der für die an die gemeinsame Einrichtung (NodeB; RNC2) übertragenen Daten Zuordnungsvorschriften, die für die erste Funkzelle (S1) und die zweite Funkzelle (S2) gemeinsam sind, eingesetzt werden, damit eine Versendung an die Teilnehmerstation (UE) alternativ unter Verwendung des ersten Zuordnungsmusters oder unter Verwendung des zweiten Zuordnungsmusters möglich ist.
